(19) Europäisches Patentamt
European Patent Office
Office européen des brevets

(11) EP 4 757 072 A1

(12) EUROPEAN PATENT APPLICATION

(43) Date of publication:
10.06.2026 Bulletin 2026/24

(51) International Patent Classification (IPC):
H01Q 3/26 (2006.01)    H04B 7/06 (2006.01)

(21) Application number: 25221105.7

(22) Date of filing: 05.12.2025

(52) Cooperative Patent Classification (CPC):
H04B 7/0617; H01Q 3/26

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 05.12.2024 FI 20246426

(71) Applicant: Nokia Solutions and Networks Oy
02610 Espoo (FI)

(72) Inventors:
• KOTESHWAR SRINATH, Pavan
Orsay (FR)
• SOHRABI, Foad
Morristown (US)
• VENKATESAN, Sivarama
West Orange (US)
• DU, Jinfeng
West Windsor (US)

(74) Representative: Nokia EPO representatives
Nokia Technologies Oy
Karakaari 7
02610 Espoo (FI)

(54) **LAYERED ANALOG WEIGHTING WITH STATIC AND REAL-TIME STAGES OF RF SIGNALS IN A WIRELESS COMMUNICATION SYSTEM**

(57) A method comprising transmitting to a set of one or more devices, at least one radio frequency signal, the transmitting comprising: applying (201) a current first set of analog weights to the at least one radio frequency signal to distribute the at least one radio frequency signal to antenna elements of the antenna array in accordance with a distribution of the first set of analog weights, resulting in antenna element level signals; and applying (203) a predefined second set of analog weights to the antenna element level signals to distribute the antenna element level signals to radiators of the antenna elements in accordance with a distribution of the second set of analog weights.

Applying a current first set of analog weights to the at least one radio frequency signal to distribute the at least one radio frequency signal to antenna elements of the antenna array in accordance with a distribution of the first set of analog weights, resulting in antenna element level signals 201

Applying a predefined second set of analog weights to the antenna element level signals to distribute the antenna element level signals to radiators of the antenna elements in accordance with a distribution of the second set of analog weights 203

Fig. 2

EP 4 757 072 A1

## Description

### TECHNICAL FIELD

Various example embodiments relate to telecommunication systems, and more particularly to an apparatus for applying analog weights to radio frequency (RF) signals.

### BACKGROUND

In wireless communication systems such as Long Term Evolution (LTE) and Fifth-generation wireless networks (5G), efficient signal distribution across antennas may be essential for transmission of RF signals. Single-stage analog weighting schemes are commonly used to support high data rates, reliable coverage, and improved energy efficiency. However, there remains a need for further advancements in these techniques.

### SUMMARY

Example embodiments provide an apparatus for a wireless communication system, the apparatus comprising: an antenna array configured to transmit to a set of one or more devices, at least one radio frequency signal by at least: apply a current first set of analog weights to the at least one radio frequency signal to distribute the at least one radio frequency signal to antenna elements of the antenna array in accordance with a distribution of the first set of analog weights, resulting in antenna element level signals; and apply a predefined second set of analog weights to the antenna element level signals to distribute the antenna element level signals to radiators of the antenna elements in accordance with a distribution of the second set of analog weights.

Example embodiments provide a method comprising: transmitting to a set of one or more devices, at least one radio frequency signal, the transmitting comprising: applying a current first set of analog weights to the at least one radio frequency signal to distribute the at least one radio frequency signal to antenna elements of the antenna array in accordance with a distribution of the first set of analog weights, resulting in antenna element level signals; and applying a predefined second set of analog weights to the antenna element level signals to distribute the antenna element level signals to radiators of the antenna elements in accordance with a distribution of the second set of analog weights.

Example embodiments provide a computer program product comprising processor executable instructions for causing an apparatus for performing at least the method.

Example embodiments provide a non-transitory computer readable medium comprising program instructions that, when executed by an apparatus, cause the apparatus to perform at least the method.

### BRIEF DESCRIPTION OF THE DRAWINGS

The accompanying figures are included to provide a further understanding of examples, and are incorporated in and constitute part of this specification. In the figures:

FIG. 1 is a block diagram illustrating an example radio access network in accordance with an example of the present subject matter;

FIG. 2 is a process flowchart illustrating a method to transmit to a set of one or more devices, at least one radio frequency signal using an antenna array according to an example of the present subject matter;

FIG. 3 a method to transmit to a set of one or more devices, at least one radio frequency signal using an antenna array according to an example of the present subject matter;

FIG. 4 is a process flowchart illustrating a method for using the first and second sets of analog weights to weight radio frequency signals according to an example of the present subject matter;

FIG. 5 is a block diagram illustrating a method for application weights to radio frequency signals according to an example of the present subject matter;

FIG. 6 is a process flowchart illustrating a method for determining the second set of analog weights for the apparatus according to an example of the present subject matter;

FIG. 7 is a process flowchart illustrating a method for determining the first set of analog weights for the apparatus according to an example of the present subject matter; and

FIG. 8 is a block diagram illustrating an example apparatus according to the present subject matter.

## DETAILED DESCRIPTION

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

The present subject matter may implement multiple layers of analog weighting, supporting both static configurations and real-time adjustments, to improve control and adaptability in complex communication scenarios. Specifically, this approach may enable layered analog weighting with both static and dynamic stages for radio frequency signals in a wireless communication system.

The wireless communication system comprises nodes such as base stations, wherein each node may serve devices located within the node's geographical area of service. The wireless communication system may support one or more radio access technologies (RATs). A radio access technology of the radio access technologies may, for example, be evolved universal terrestrial radio access (E-UTRA), 5G new radio (NR), or a 6G based system, but it is not limited to, as a person skilled in the art may apply the present subject matter to other wireless communication systems provided with necessary properties. The device may refer to an equipment that connects to and communicates with the wireless communication system to access services and applications provided by the wireless communication system. The device may, for example, be a user equipment. The device may, for example, comprise any one of: a mobile phone, a tablet, an Internet of things (IoT) device, or a laptop.

An apparatus may be provided for transmission of a set of one or more radio frequency signals. For simplification, the set of one or more radio frequency signals may be referred to as a set of radio frequency signals, while still encompassing the possibility of containing only a single radio frequency signal.

The set of radio frequency signals may be prepared for transmission, each in analog format and carrying data intended for specific one or more devices. The set of radio frequency signals may have undergone baseband processing steps-including, for example, modulation, upconversion, and filtering-so they may be prepared for transmission through an antenna array.

The apparatus may, for example, be comprised in a node or in a device of the wireless communication system. The apparatus comprises the antenna array. The antenna array comprises a set of antenna elements. Each antenna element of the antenna array comprises radiators. The radiator may be a component configured for emitting or receiving radio frequency signals.

The present subject matter may provide enhanced control over the transmission of the set of radio frequency signals through a layered adjustment approach, enabling analog beamforming to occur at two distinct stages. This dual-stage beamforming may allow adjustments to be made both at the antenna element level and subsequently at the radiator level, optimizing signal directionality and strength for improved performance in dynamic environments. For that, the radiators and the antenna elements may be provided as follows.

The radiator may be configured to independently adjust one or more signal parameters of the radio frequency signal it handles. The signal parameter of the radio frequency signal may be any one of: amplitude, phase or frequency. The control over signal parameters at the radiator level may enable alignment or shifting relative to other radiators within the antenna array, supporting precise directional beamforming.

The antenna element may serve as a functional unit within the antenna array, consisting of multiple radiators, each responsible for emitting or receiving a portion of the radio frequency signal. At the antenna element level, the radio frequency signal may undergo initial adjustments to its one or more signal parameters before being distributed to individual radiators. This adjustment at the antenna element level may enable the antenna element to contribute to the overall beamforming and pattern shaping within the antenna array for creating a base spatial pattern.

Accordingly, the antenna array in the present subject matter may enable enhanced control over radio frequency signal transmission by utilizing radiators and antenna elements designed for the configurability described above. For instance, the antenna array may be configured to transmit the set of radio frequency signals to a set of one or more devices. This configuration may comprise the application of a current first set of analog weights to the set of radio frequency signals to distribute the set of radio signals to the antenna elements of the antenna array in accordance with a distribution of the first set of analog weights. This may result in antenna element level signals associated with antenna elements respectively. Furthermore, a predefined second set of analog weights may be applied to the antenna element level signals to distribute the antenna element level signals to radiators of the antenna elements in accordance with a distribution of the second set of analog weights.

Indeed, the set of radio frequency signals may require precise modification to optimize their directional focus across the antenna array. For that, the current first set of analog weights is applied to the set of radio frequency signals, e.g., for controlling signal parameters, like phase and amplitude, to tailor the initial distribution of the set of radio frequency signals across the antenna array's antenna elements. The term "current first set of analog weights" refers to a set of analog weights that may be dynamically determined in real-time operation of the apparatus in the wireless communication system, adapting to the current transmission conditions, device locations, or channel characteristics. This initial application of analog weights may result in antenna element-level signals that are distributed across the antenna array, with each antenna element carrying a signal modified according to this first set of analog weights.

The distribution of the first set of analog weights may refer to the specific arrangement and application of weights to each radio frequency signal in relation to each antenna element in the antenna array. For example, the distribution of the first set of analog weights may define the signal each antenna element receives, whether through a full weighted combination of signals across the array or through a direct, isolated configuration enabled by a block diagonal matrix. The distribution may thus take various forms depending on the wireless communication system's configuration and transmission needs. In one example, the first set of analog weights may form a full matrix, where each weight in the matrix may determine the phase and amplitude adjustments applied to each radio frequency signal across the antenna array, resulting in a weighted combination of the set of radio frequency signals at each antenna element, if the set of radio frequency signal comprises more than one radio frequency signal. In another example, the weight matrix may be block diagonal (i.e., only block diagonal elements are non-zero). In this case, each radio frequency signal in the set of radio frequency signals may be independently routed to a specific antenna element with no combination between signals-each antenna element effectively transmits a distinct, isolated radio frequency signal, modified only by its respective phase and amplitude from the block diagonal entries. This configuration may save processing resources while enabling initial spatial control.

After application of the first set of analog weights, another layer of weighting may be performed by the application of the predefined second set of analog weights. The predefined second set of analog weights refers to a set of fixed, preconfigured values that differ from the dynamically adjusted "current" analog weights applied at the antenna element level. These predefined second set of analog weights may instead be consistently applied at the radiator level. As each antenna element-level signal may be distributed to individual radiators, this predefined second set of analog weights may refine the signal parameters, specifically phase and amplitude, allowing for precise adjustments tailored to the characteristics of each radiator.

The distribution of the second set of analog weights refers to the specific arrangement and application of analog weights to the antenna element-level signals as they are directed to individual radiators within each antenna element. This distribution may further refine the initial signal parameters (e.g., phase and amplitude) established by the first set of analog weights. Typically, this second set of analog weights is predefined, allowing for fixed configurations. In one example, the second set of analog weights may form a full matrix where each weight determines how an antenna element-level signal is modified at each radiator within the antenna element. Alternatively, the second set of analog weights may be a block diagonal matrix (i.e., only block diagonal elements are non-zero). In this case, the distribution may be more direct and specific to each radiator.

According to one example, the apparatus may be configured to select from available analog weights the first set of analog weights that correspond to at least one of the following: a time slot covered by the at least one radio frequency signal; or a propagation channel condition of propagation channels for the transmission of the at least one radio frequency signal to the set of devices.

This example may select the first set of analog weights from available weights based on either the time slot covered by the set of radio frequency signals or the propagation channel conditions. The time slot covered by the set of radio frequency signals may refer to a specific time interval during which the set of radio frequency signals is scheduled to be transmitted. This example may enable the adaptability of analog weights. For time slots, it may allow the apparatus to adjust signal parameters to match the unique demands of each interval, such as reducing interference during peak traffic periods or enhancing power efficiency during off-peak times. For propagation channel conditions, the apparatus may dynamically select weights that optimize signal quality in response to real-time environmental factors, like multipath fading, interference, or varying propagation paths. This example may thus maximize the efficiency and accuracy of beamforming.

The propagation channel condition may, for example, be defined by a distribution of devices in the wireless communication system, as the spatial arrangement of devices may impact signal interference and attenuation. Alternatively, or additionally, the propagation channel condition may be defined by environmental factors along the propagation channels between devices and the apparatus, such as physical obstructions or weather conditions all of which may influence signal strength and quality within the propagation channel. The propagation channel condition may, for example, be quantified by evaluating attributes representing the distribution of devices, and environmental factors descriptive of the propagation channels with the devices. The values of these attributes may collectively be referred to as a descriptor.

According to one example, the apparatus may be configured to select from available analog weights the first set of analog weights that enable the transmission of the set of radio frequency signals with an optimal performance indicator for the set of devices within defined power constraints.

For example, the available analog weights may, for example, comprise multiple instances of the first set of analog weights, each being associated with a specific propagation channel condition and fulfill the optimal performance indicator within the defined power constraints. The current first set of analog weights may be selected as one of the instances that corresponds to the current propagation channel condition for the transmission of the set of radio frequency signals.

The power constraint may, for example, require that the total radiated power of the antenna array, after applying weighting to and then transmitting the set of radio frequency signals, does not exceed a specified power limit, and/or the emitted powers of the antenna array in certain directions are within specified limits respectively. The performance indicator may be determined based on the transmitted set of radio frequency signals by evaluating metrics such as signal quality, coverage area, or interference levels. In this case, an optimal performance indicator may refer to a value of the performance indicator that fulfills an optimization condition, wherein the optimization condition may, for example, comprise the maximization of signal quality, the minimization of interference, or the efficient allocation of power to achieve the desired transmission performance.

Selecting the first set of analog weights based on the optimal performance indicator within defined power constraints may enable the apparatus to balance performance and energy efficiency effectively. This approach may ensure that each radio frequency signal is transmitted in a way that maximizes a specific performance metric, such as signal quality, data rate, or coverage. By further using optimized weights with respect to power constraints, the apparatus may achieve desired performance without exceeding allowable power levels, which may be advantageous for maintaining regulatory compliance and conserving battery life in power-sensitive applications.

According to one example, the available analog weights are provided as an adaptive codebook in accordance with different propagation channel conditions, wherein the adaptive codebook comprises per propagation channel condition analog weights that are determined to enable an optimal performance indicator, within the defined power constraints, for devices whose propagation channels define the propagation channel condition.

The use of an adaptive codebook of available analog weights tailored to different propagation channel conditions may allow the apparatus to dynamically select weights that are best suited for specific propagation environments. In this setup, the codebook may include precomputed sets of analog weights optimized for distinct propagation channel conditions (such as line-of-sight, multipath, specific user distribution or high-interference scenarios). Each set of analog weights in the codebook may be designed to achieve an optimal performance indicator-such as maximizing signal quality or data throughput-while staying within defined power constraints. By associating these sets of analog weights with propagation channel conditions, the apparatus may rapidly adjust to real-time changes in the propagation environment, selecting the most effective analog weights for each device or group of devices based on their current channel characteristics. This adaptive codebook approach may provide computational efficiency, as it may enable fast weight selection without the need for real-time computation.

According to one example, the defined power constraints are specified on a per-bin basis across bins of elevation angles determined by relative positioning of devices and a serving node. The serving node may comprise the apparatus.

Each bin may correspond to a specific range of elevation angles, reflecting the spatial orientation and distance between the devices and the serving node. This targeted allocation may not only reduce overall power consumption but also minimize interference between devices located at varying elevation angles.

Bins may be defined by segmenting the elevation angle spectrum around the serving node (e.g., the apparatus) in the wireless communication system, with each bin corresponding to a specific range of elevation angles and having specific power constraint. For example, if the serving node covers elevation angles from 0° to 90°, this range may be divided into several bins, such as 0°-5°, 5°-10°, and so forth. In one example, the bins and associated power constrains may be predefined bins such as the above-the-horizon (ATH) equivalent isotropic (or isotropically) radiated power (EIRP) constraints e.g., based on World Radiocommunication Conference (WRC)-2023. The first set of analog weights may be derived from the analog weights that fulfill power constraints in the assigned bin(s) and enable the optimal performance indicator for the set of devices. For example, the available weights may be organized into a codebook, which contains a set of elements, with each element representing a specific instance of analog weights that may be applied to the set of radio frequency signals. Each element in the codebook may be associated with a respective descriptor that describes the propagation channel condition for devices in the wireless communication system and whose instance of analog weights fulfill the optimal performance indicator for the devices within the defined power constraints. The derivation of the current first set of analog weights may involve evaluating a current descriptor for the set of devices in the wireless communication system and comparing it with the descriptors in the codebook. This process may include selecting the element from the codebook that best matches the current descriptor.

According to one example, the apparatus may be configured to update the available analog weights in response to an update condition being fulfilled, wherein the update condition is at least one of: detection of a propagation channel condition not covered by the propagation channel conditions for which the available analog weights are determined, or a specified time update interval.

Updating the available analog weights in response to an update condition-such as the detection of a new, uncovered propagation channel condition or the arrival of a specified time interval-may ensure that the apparatus maintains optimal performance and adaptability in dynamic environments. When a new propagation channel condition arises that isn't covered by the pre-existing weights, updating the available analog weights may enable the apparatus to recalibrate for improved signal quality under the new conditions. Similarly, updating the available analog weights at specified time intervals may allow the apparatus to refresh its configuration proactively, ensuring it may remain responsive to gradual changes in the environment or device locations. The combination of condition-based and time-based updates may provide a robust framework for continuous adaptation.

The update of the analog weights may be performed by the apparatus. Alternatively, the update of the analog weights may not be performed by the apparatus itself; in this case, updating the analog weights may comprise the apparatus receiving them from an external source, such as a centralized controller or network node, which has calculated or updated the available analog weights. This external update process may enable the apparatus to stay aligned with optimal transmission configurations without the need for local computation.

According to one example, the apparatus may be configured to determine propagation channel conditions for determination of the available analog weights using real time data. The real time data comprises received reference signals from devices in the wireless communication system.

Determining propagation channel conditions for determining the available analog weights using real-time data may allow for highly responsive and optimized signal transmission. This process may use reference signals from devices in the wireless communication system received at a node (e.g., including the apparatus). The reference signals may, for example, be collected (to form the real time data) to determine the available analog weights. The real time data may be provided as a training dataset. The real time data may be used to estimate the available analog weights that optimize the performance indicator for devices with the defined power constraints. This may enable the initial determination of the available analog weights or the update of existing available analog weights.

According to one example, the predefined second set of analog weights is designed to enable transmissions of radio frequency signals in the wireless communication system with an optimal performance indicator, for receiving devices, within defined power constraints.

The predefined second set of analog weights may be specifically designed to enhance the transmission of radio frequency signals in the wireless communication system by focusing on achieving an optimal performance indicator, such as signal quality, coverage, or data rate, while adhering to defined power constraints.

According to one example, the predefined second set of analog weights is determined based on propagation channel conditions which are determined using synthetic data, wherein the synthetic data comprises at least one of historical data on channels and simulation data of channels in the wireless communication system.

The synthetic data may allow to anticipate a wide range of possible propagation channel conditions by leveraging past observations and predictive models, enabling the second set of analog weights to be designed with a proactive, robust approach. The synthetic data may be provided as a training dataset. Unlike real-time data, synthetic data may provide a comprehensive view of channel behavior across various conditions that may not be immediately present but are likely to occur, such as seasonal interference patterns or typical congestion scenarios. This may be advantageous because it may allow the second set of analog weights to be pre-optimized for anticipated conditions, reducing the need for constant real-time recalibration while still delivering effective performance in expected scenarios.

According to one example, the determination of the available analog weight and the second set of analog weights is performed using respective objective functions that optimize the performance indicator within the defined power constraints

The determination of the available analog weights and the second set of analog weights using objective functions respectively may provide a systematic and optimized approach to achieve a targeted performance indicator, such as signal quality, data rate, or coverage, while adhering to defined power constraints. The determination of the available analog weights and the second set of analog weights may be performed using a first objective function and a second objection function respectively. An objective function may be a mathematical tool that evaluates various potential weight configurations, scoring each based on how effectively it meets the desired performance within power limits.

The first objective function may, for example, be a first loss function. The first loss function may be structured as the sum of two terms to achieve a balanced optimization between performance and power constraints. A first term, referred to as performance term, may represent the performance constraint, enabling to improve performance indicators such as signal quality, data rate, or coverage. The performance term drives the optimization to meet or exceed performance targets, enhancing overall communication effectiveness. The performance term may, for example, be defined as a function of channel responses (each i-th channel response may be referred to as $h_i$) of channels between the apparatus and devices. The second term, referred to as power term, represents the power constraint, which may impose penalties on excessive power usage to ensure energy efficiency and compliance with power limits, such as EIRP thresholds in specified angular directions. The power term may, for example, represent a difference between a total radiated power caused by weighted signals and a reference power. The total radiated power may, for example, be determined based on the input power provided by the radio frequency signals (after applying the two sets of analog weights and potentially the digital precoding) and by considering the response vector and gain of each radiator. The power term may (indirectly) also depend on the channel responses, as each channel response may be linked to a specific device position, which is then used to evaluate the power term because it depends on the device's position. By combining the performance and power terms, the first loss function may enable to optimize performance within sustainable power levels, creating a balanced solution that aligns with both performance goals and energy limitations. In one example, the performance and power terms may be weighted in the first loss function by factors to prioritize between the two.

For example, to determine the available analog weights using the first loss function, a training dataset may be collected during real-time operation of the apparatus within the wireless communication system. This training dataset consists of entries (or samples), each containing a channel response for a channel between the apparatus and a device. Training is performed over multiple training steps until a convergence criterion is met, which may involve minimizing the first loss function. In each training step, a batch of samples from the training dataset is selected, the first loss function is evaluated, and the analog weights are adjusted to minimize the first loss function.

The second objective function may, for example, be a second loss function. The second loss function may be structured as the sum of two terms to achieve a balanced optimization between performance and power constraints. A first term, referred to as performance term, may represent the performance constraint, enabling to improve performance indicators such as signal quality, data rate, or coverage. The performance term drives the optimization to meet or exceed performance targets, enhancing overall communication effectiveness. The performance term may, for example, be defined as a function of channel responses ($h_i$) of channels between the apparatus and devices. The second term, referred to as power term, represents the power constraint, which may impose penalties on excessive power usage to ensure energy efficiency and compliance with power limits, such as EIRP thresholds in certain angular directions. The power term may, for example, represent a difference between a total radiated power caused by weighted signals and a reference power. The total radiated power may, for example, be determined based on the input power provided by the radio frequency signals (after applying the two sets of analog weights and potentially the digital precoding) and by considering the response vector and gain of each radiator. By combining the performance and power terms, the second loss function may enable to optimize performance within sustainable power levels, creating a balanced solution that aligns with both performance goals and energy limitations. In one example, the performance and power terms may be weighted in the second loss function by factors to prioritize between the two.

For example, to determine the second set of analog weights using the second loss function, a training dataset may be generated using synthetic data. This training dataset consists of entries (or samples), each containing a channel response for a channel between the apparatus and a device. Training is performed over multiple steps until a convergence criterion is met, which may involve minimizing the second loss function. In each training step, a batch of samples from the training dataset is selected, the second loss function is evaluated, and the second set of analog weights are adjusted to minimize the second loss function.

According to one example, the apparatus may be configured to apply a digital precoding on one or more data streams to distribute the one or more data streams to at least one radio frequency chain associated with the set of radio frequency signals respectively. This example may enable a hybrid beamforming approach. The digital precoding may be performed using digital perceiving weights. The set of radio frequency signals may, for example, be processed on the radio frequency chains respectively. This example may enable to map the one or more data streams to the set of radio frequency signals. The mapping may be performed based on the transmission technique used, such as the Multiple Input Multiple Output (MIMO) technique.

In one example, the available analog weights and the second set of analog weights may be derived through simultaneous optimization, or alternatively, they may be obtained in separate optimization stages. In another example, the digital precoding weights may also be determined during the optimization process, either independently or in conjunction with the analog weights.

Applying digital precoding to one or more data streams to distribute them across radio frequency chains may enable precise control over how data is spatially transmitted in the wireless communication system. Digital precoding may be performed in the digital domain before the RF conversion, allowing the apparatus to apply complex adjustments to the phase and amplitude of each data stream. By mapping each data stream to specific radio frequency chains associated with the set of radio frequency signals, the apparatus may control how multiple signals interact, optimizing beamforming, and spatial multiplexing for targeted device communication.

As these pre-coded data streams pass through their respective radio frequency chains, the first set of analog weights may be applied to further tailor the radio frequency signals based on real-time channel conditions or device positioning. Following this, the second set of analog weights may refine the signal distribution at the radiator level. This layered approach-starting with digital precoding, followed by dual analog weighting-may ensure that each transmitted signal is optimally shaped for its specific propagation environment maximizing signal quality within defined power constraints. The interplay between digital precoding and dual analog weighting may thus create a highly adaptable transmission system, leveraging digital and analog control layers.

According to one example, the antenna array comprises shifters and attenuators. The shifters and attenuators comprise dynamically configurable shifters and attenuators configured for performing the application of the first set of analog weights.

Shifters may control the phase of the signals, allowing for alignment or adjustment of the signal's directionality by introducing phase shifts, while attenuators adjust the amplitude. By making these shifters and attenuators dynamically configurable, the apparatus may modify the phase and amplitude of signals in real-time, based on current channel conditions or transmission goals.

According to one example, the distribution of the first set of analog weights is provided so that each radio frequency signal of the set of radio frequency signals is assigned to a respective distinct subset of antenna elements of the antenna elements in accordance with the first set of analog weights.

In this example, the distribution of the first set of analog weights may be configured such that each radio frequency signal within the set of radio frequency signals is assigned to a distinct subset of antenna elements, with each subset receiving unique phase and amplitude adjustments based on the first set of analog weights. This distribution may, for example, be provided as a block diagonal weight matrix where each block may represent the respective subset. In this arrangement, rather than combining multiple radio frequency signals across all antenna elements, each signal may be selectively directed to a specific group of antenna elements, optimizing spatial control for each individual transmission. This targeted assignment may allow for a tailored beamforming approach, where each subset of antenna elements may be dynamically configured to align with the spatial requirements of its respective radio frequency signal.

According to one example, the set of radio frequency signals is multiple radio frequency signals which are transmitted simultaneously.

According to one example, the set of radio frequency signals is encoded according to a set of frequency units, with the first set of analog weights comprising subsets of analog weights for the set of frequency units respectively, the second set of analog weights comprising subsets of analog weights for the set of frequency units respectively.

In this example, the set of radio frequency signals is encoded according to specific frequency units (such as subcarriers or frequency bands). The first set of analog weights may include distinct subsets of weights tailored to these frequency units, enabling the initial configuration of phase and amplitude adjustments for each frequency unit across the antenna elements. Similarly, the second set of analog weights may also be structured in subsets corresponding to these same frequency units, providing a finer layer of control at the radiator level. This multi-frequency approach may allow each frequency unit within a radio frequency signal to be independently adjusted in terms of spatial distribution, enabling tailored beamforming and precise control over signal propagation per frequency unit.

According to one example, the radiators are grouped into the antenna elements to enable dual-polarized signals.

The grouping of radiators into antenna elements may be designed to support the transmission of dual-polarized signals, which allows each antenna element to transmit and receive signals with two distinct polarizations, e.g., horizontal and vertical, or right-hand and left-hand circular polarizations. This grouping approach may allow the first set of analog weights to manage initial spatial configuration for each polarized signal independently, while the second set of analog weights may further refine phase and amplitude at the radiator level, optimizing each polarized stream for precise beamforming and signal quality. This dual-polarization capability may enable each antenna element to handle two separate signal streams on different polarization planes, effectively doubling the information-carrying capacity without requiring additional bandwidth or spatial separation.

For example, the number of radiators may be $N_{RAD}$ and the antenna array may be provided so that the radiators form a uniform planar array with $N_{RAD}^r$ rows and $N_{RAD}^c$ columns with corresponding radiator spacing of $d_R$ and $d_C$, where $N_{RAD}/2 = N_{RAD}^r \times N_{RAD}^c$.

According to one example, the defined power constraints comprise one or more limits on EIRP.

The defined power constraints include one or more limits on EIRP, which may represent the total power radiated by the antenna array as if it were emitted equally in all directions. By setting EIRP limits, this example may ensure that the power radiated toward specific directions does not exceed regulatory or operational thresholds, which may be essential for minimizing interference with other systems and staying within permitted power levels. These constraints may allow the apparatus to control how much energy is directed toward target devices.

The following table may provide example ATH EIRP constraints based on WRC-2023.

| Elevation angle $\theta$ above horizon (deg) | Expected EIRP (dBm/MHz) |
|---|---|
| $0 \leq \theta < 5$ | 27 |
| $5 \leq \theta < 10$ | 23 |
| $10 \leq \theta < 15$ | 19 |
| $15 \leq \theta < 20$ | 18 |

(continued)

| Elevation angle $\theta$ above horizon (deg) | Expected EIRP (dBm/MHz) |
|---|---|
| $20 \leq \theta < 30$ | 16 |
| $30 \leq \theta < 60$ | 15 |
| $60 \leq \theta \leq 90$ | 15 |

The table provides seven bins, where the lower and upper bound of each bin may be referred to as $\theta_L$ and $\theta_H$, respectively, and each j-th bin may be referred to as $\theta_j^{bin}$.

According to one example, the performance indicator for a set of devices includes a device-level indicator and a collective indicator, wherein the device-level indicator includes at least one of: Signal-to-Interference-plus-Noise Ratio (SINR), throughput, latency, or packet loss for an individual device, wherein the collective indicator includes, across the set of devices, at least one of: average or median throughput, aggregate throughput, or overall latency distribution.

The following presents an example implementation for defining the total radiated power, which may be utilized to evaluate the first and second loss functions.

For example, the apparatus may be equipped with $N_{RAD}$ radiators, $N_{AE}$ antenna elements (AEs), and $N_{TRX}$ radio frequency chains serving users by transmitting $N_S$ data streams (also called data layers) in each subchannel, (e.g., subcarrier or physical resource block (PRB)), where K is the total number of the subchannels. Each radio frequency chain may correspond to a respective radio frequency signal to be transmitted.

The application of the second set of analog weights may be referred to as fixed analog beamforming (BF) and the application of the first set of analog weights may be referred to as adaptive analog beamforming. The first set of analog weights may be referred to as adaptive analog beamformer or adaptive analog precoder. The second set of analog weights may be referred to as fixed analog beamformer or fixed analog precoder. The second set of analog weights may be denoted with the matrix $V_{FA} \in \mathbb{C}^{N_{RAD} \times N_{AE}}$. The first set of analog weights may be denoted with the matrix $V_{AA} \in \mathbb{C}^{N_{AE} \times N_{TRX}}$. The per subchannel digital precoding may be denoted with the matrix $V_D[k] \in \mathbb{C}^{N_{TRX} \times N_S}$. In this example, the two analog beamformers may be partially-connected analog beamformers. Fully-connected may mean that there is a path between each input signal of the analog beamformer to each output. This may be implemented using a full weight matrix. In contrast, partially-connected may mean, each input signal of the analog beamformer may affect only a portion of outputs. This may be implemented using a block diagonal weight matrix. Furthermore, the adaptive analog beamformer may be implemented by phase shifters and attenuators that can be configured dynamically. Hence, the analog beamformers may be mathematically modeled as follows:

$$V_{AA} = \frac{1}{\sqrt{M_1}} \begin{bmatrix} v_1 & 0 & 0 & 0 \\ 0 & v_2 & 0 & 0 \\ 0 & 0 & ... & 0 \\ 0 & 0 & 0 & v_{N_{TRX}} \end{bmatrix} \text{ where } v_n = \begin{bmatrix} a_{n1}e^{j\theta_{n1}} \\ a_{n2}e^{j\theta_{n2}} \\ ... \\ a_{nM_1}e^{j\theta_{nM_1}} \end{bmatrix}, a_{ni} \quad (1)$$

$$\in [0 < \gamma \leq 1,1], M_1 = \frac{N_{AE}}{N_{TRX}},$$

$$V_{FA} = \begin{bmatrix} w_1 & 0 & 0 & 0 \\ 0 & w_2 & 0 & 0 \\ 0 & 0 & ... & 0 \\ 0 & 0 & 0 & w_{N_{AE}} \end{bmatrix} \text{ where WLG } \|w_n\|^2_2 = 1 \text{ and } M_2 = \frac{N_{RAD}}{N_{AE}}. \quad (2)$$

In equation (1), the attenuation elements $a_{ni}$, $i = 1,\cdots,M_1$, $\forall n = 1, \cdots, N_{TRX}$, model the variable attenuations with factor $\gamma$ representing the minimum value. For example, factor $\gamma$ may be limited to 0.5 for example (e.g., an attenuation of 3dB) e.g., this may be advantageous for digital precoding. Based on this, the total radiated power may be written as follows:

$$Tr\left(V_{FA}V_{AA}\left(\sum_{k}V_{D}[k]V_{D}^{H}[k]\right)V_{AA}^{H}V_{FA}^{H}\right)$$

$$= \sum_{k}Tr(V_{AA}V_{D}[k]V_{D}^{H}[k]V_{AA}^{H}) \leq P_{TX} \tag{3}$$

The transmitted signal on subchannel k is

$$x[k] = V_{FA}V_{AA}V_{D}[k]s[k] \text{ where } \mathbb{E}_{s}\left[s[k]s^{H}[k]\right] = I_{N_S} \tag{4}$$

where $\mathbb{E}_{x}[f(x)]$ denotes the expectation of a function *f(x)* of a random variable x over its distribution.

During real-time operation, the matrix $V_{AA}$ for weighting radio frequency signals may for example be selected from a codebook. The content of a codebook is a set of elements, each element being a set of vectors. So, a codebook with 64 elements means that it contains 64 sets of vectors, and at run-time, one of those 64 sets of vectors is chosen. Each set of vectors consists of $N_{TRX}$ vectors with i-th vector representing the analog weights to be applied to the $M_1$ antenna elements of i-th TRX. The vectors may, for example, be chosen at runtime to maximize the performance for the set of served UE in the time slot in context.

For example, each entry of $v_n$ in equation (3) may only take a finite set of values, the number of such values determined by the maximum number of bits that can specify a given configuration in the beamforming integrated circuit (BFIC). For example, 6 bits for the attenuator in steps of 0.25dB and 6 bits for the phase in steps of 5.625° would mean that attenuation elements $\alpha_{ni}$, i = 1, $\cdots$, $M_1$, may take 64 levels of attenuation with a maximum attenuation of 16dB and shifting elements $\theta_{ni}$, i = 1, $\cdots$, $M_1$, may take 64 different phase values covering 360°. But this would mean a large set of possibilities for the first set of analog weights $V_{AA}$. For example, it may be desirable to instead fix a codebook $\mathcal{C}_{AA}$ of cardinality $M_{AA}$ from which each matrix $V_{AA}$ can take values. Depending on the set of devices being served, it may be possible to dynamically configure or reconfigure this codebook $\mathcal{C}_{AA}$ over time.

The apparatus may comprise a transmission configuration including the fixed analog beamformer $V_{FA}$ (one-time) and the dynamically configurable codebook $\mathcal{C}_{AA}$ (at regular intervals of time) such that some desired key performance indicators (KPIs) like coverage or average rate is maximized while the ATH EIRP constraints (e.g., WRC-2023 constraints) are satisfied.

The EIRP expression may be derived as follows. For an overall precoder at subchannel *k:* $V_{FA}V_{AA}V_{D}[k] \in \mathbb{C}^{N_{RAD} \times N_S}$ and for each polarization, the overall $N_{RAD}/2 = N_{RAD}^{r} \times N_{RAD}^{c}$ radiators may form a uniform planar array with $N_{RAD}^{r}$ rows and $N_{RAD}^{c}$ columns with corresponding radiator spacing of $d_R$ and $d_C$. Assuming vertical paneling, the unit-norm channel (or antenna array response) in direction of azimuth $\phi$ and elevation θ for each polarization is given by

$$a_{\phi,\theta}(r,c) = e^{j\frac{2\pi}{\lambda}d_C (c-1)\sin(\phi)\cos(\theta)+j\frac{2\pi}{\lambda}d_R (r-1)\sin(\theta)}. \tag{5}$$

For each polarization, the array response vector may be given by:

$$\begin{aligned}&a_{UPA}(\phi,\theta)\\&= \left[a_{\phi,\theta}(1,1),a_{\phi,\theta}(2,1),...,a_{\phi,\theta}(N_{RAD}^{r},1),a_{\phi,\theta}(1,2),...,a_{\phi,\theta}(r,c),\ ...,a_{\phi,\theta}(N_{RAD}^{r},N_{RAD}^{c})\right]\end{aligned} \tag{6}$$

For dual polarization the array response vector may be given by:

$$a_{UPA,d}(\phi,\theta) = [a_{UPA}^{T}(\phi,\theta),a_{UPA}^{T}(\phi,\theta)]^{T}. \tag{7}$$

Then, the instantaneous EIRP may be calculated as:

$$EIRP_{instant}(\phi, \theta, k) = \left\| g(\theta, \phi) \, a_{UPA,d}^H(\phi, \theta) \, V_{FA} V_{AA} V_D[k] \right\|^2. \tag{8}$$

where $g(\theta, \phi)$ denotes the radiator gain pattern. For example, based on a set of uniformly spaced elevation angles

$$\Theta = \left\{ -\frac{\pi}{2} + \left(\frac{1}{2} + n\right)\frac{\pi}{N}, n = 0, \cdots, N - 1 \right\}$$ and a set of uniformly spaced azimuth angles

$$\Phi = \left\{ -\pi + \left(\frac{1}{2} + m\right)\frac{\pi}{M}, m = 0, \cdots, M - 1 \right\}$$ and corresponding values of $EIRP_{instant}(\phi, \theta, k)$, $\forall \theta \in \Theta$, $\forall \phi$

$\in \Phi$, the average EIRP within an elevation strip $-\frac{\pi}{2} \le \theta_L \le \theta \le \theta_H \le \frac{\pi}{2}$ is approximated as

$$EIRP_{avg}(\theta_L, \theta_H)$$
$$\approx \frac{\pi}{MN(\sin\theta_H - \sin\theta_L)} \sum_{\theta \in (\theta_L, \theta_H)} \sum_{\phi \in \Phi} \sum_k \left\| g(\theta, \phi) \, a_{UPA,d}^H(\phi, \theta) \, V_{FA} V_{AA} V_D[k] \right\|^2 \cos\theta. \tag{9}$$

The average EIRP, $EIRP_{avg}(\theta_L, \theta_H)$ may be used to define the average EIRP per channel response $EIRP_{avg}\left(\theta_j^{bin}, h_i\right)$ or per channel response and instance $V_{AA}$ of analog weights $EIRP_{avg}\left(\theta_j^{bin}, V_{AA}, h_i\right)$.

The first loss function may thus be defined as follows for a maximum power transmission of $P_{TX}$ and bins $\theta_j^{bin}$ of ATH EIRP constraints:

$$\mathcal{L}_{\mathcal{C}_{AA}} = -\frac{1}{B}\sum_{h_i \in \mathcal{H}_{MB}} \max_{V_{AA} \in \mathcal{C}_{AA}} \left\{ \log\left(P_{TX}\|V_{AA}^H h_i\|^2\right) \right\} +$$

$$\lambda \sum_{\theta_j^{bin}} \text{ReLu}\left( \left(\frac{1}{B|\mathcal{C}_{AA}|}\sum_{V_{AA} \in \mathcal{C}_{AA}}\sum_{h_i \in \mathcal{H}_{MB}} EIRP_{avg}\left(\theta_j^{bin}, V_{AA}, h_i\right)\right) - EIRP_{limits}\left(\theta_j^{bin}\right)\right).$$

where $\mathcal{H}_{MB}$ may be the training dataset and $B$ is the number of selected samples of the training dataset. The first component of the sum in the first loss function may provide an example implementation of the performance term and the second component of the sum in the first loss function may provide an example implementation of the power term.

The second loss function may thus be defined as follows:

$$\mathcal{L}_{V_{FA}} = -\frac{1}{B}\sum_{h_i \in \mathcal{H}_{MB}} \log\left(P_{TX}\|V_{FA}^H h_i\|^2\right) +$$

$$\lambda \sum_{\theta_j^{bin}} \text{ReLu}\left( \left(\frac{1}{B}\sum_{h_i \in \mathcal{H}_{MB}} EIRP_{avg}\left(\theta_j^{bin}, h_i\right)\right) - EIRP_{limits}\left(\theta_j^{bin}\right)\right).$$

The first component of the sum in the second loss function may provide an example implementation of the performance term and the second component of the sum in the second loss function may provide an example implementation of the power term.

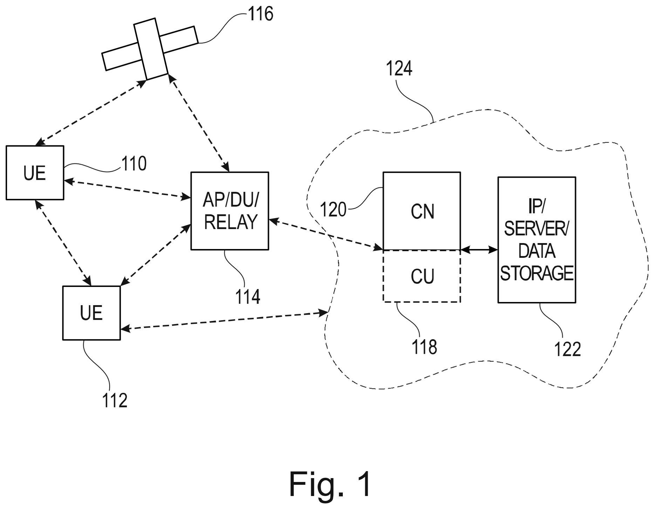

FIG. 1 is a block diagram illustrating an example radio access network in accordance with an example of the present subject matter. FIG. 1 illustrates examples of simplified system architectures only showing some elements and functional entities, all being logical units, whose implementation may differ from what is shown. The connections illustrated in FIG.1 are logical connections; the actual physical connections may be different. It is apparent to a person skilled in the art that the system typically comprises also other functions and structures than those illustrated in FIG.1.

The embodiments are not, however, restricted to the system given as an example but a person skilled in the art may apply the solution to other communication systems provided with necessary properties.

The example radio access network illustrated in FIG.1 includes devices 110 and 112. The devices 110 and 112 may, for example, be user devices. The devices 110 and 112 are configured to be in a wireless connection on one or more communication channels with a node 114. The node 114 is further connected to a core network 120. In one example, the node 114 may be an access node (such as (e/g)NodeB) 114 providing or serving devices in a cell. In one example, the node 114 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bidirectional radio links to devices. The antenna unit may comprise a plurality of antennas or antenna elements. The (e/g)NodeB is further connected to the core network 120 (CN or next generation core NGC). For example, the (e/g)NodeB may connect to an access and mobility management function (AMF) and user plane function (UPF) in the control plane and user plane, respectively. Depending on the system, the counterpart on the CN side can be a serving gateway (S-GW, routing and forwarding user data packets), packet data network gateway (P-GW), for providing connectivity of devices (UEs) to external packet data networks, or mobile management entity (MME), etc.

The device (also called user device, UE, user equipment, user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device (e.g. a portable or non-portable computing device) that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in IoT network which is a scenario in which objects are provided with the ability to transfer data over a network without requiring human-to-human or human-to-computer interaction, e.g., to be used in smart power grids and connected vehicles. The device may also utilize cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities. The device may also be called a subscriber unit, mobile station, remote terminal, access terminal, user terminal or user equipment just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all illustrated in FIG. 1) may be implemented.

5G enables using MIMO antennas, many more base stations or nodes than an existing LTE system (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require bringing the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. The MEC structure also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, IoT (massive connectivity and/or latency critical), critical communications (autonomous vehicles, traffic safety, real-time analytics, time-critical control, healthcare applications).

The communication system is also able to communicate with other networks, such as a public switched telephone network or the Internet as illustrated by the component referenced by reference numeral 122, or utilize services provided by them. The communication network may also be able to support the usage of cloud services, for example at least part of core network operations may be carried out as a cloud service (this is illustrated in FIG.1 using "cloud" 124). The communication system may also comprise a central control entity, or a like, providing facilities for networks of different operators to cooperate for example in spectrum sharing.

The technology of edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit (DU)) and non-real time functions being carried out in a centralized manner (in a centralized unit, CU 118).

It should also be understood that the distribution of labor between core network operations and base station operations may differ from that of the LTE or even be non-existent. Some other technology advancements probably to be used are Big Data and all-IP, which may change the way networks are being constructed and managed. 5G is being designed to support multiple hierarchies, where MEC servers can be placed between the core and the base station or nodeB (NB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 116 in the mega-constellation may cover several satellite-enabled network entities that create on-ground cells. The on-ground cells may be created via an on-ground relay node 114 or by a gNB located on-ground or in a satellite.

It is understandable for a person skilled in the art that the depicted system is only an example of a part of a radio access system and in practice, the system may comprise a plurality of (e/g)NBs, the device may have an access to a plurality of radio cells and the system may comprise also other apparatuses, such as physical layer relay nodes or other network elements, etc. One of the (e/g)NBs may be a Home(e/g)NB (H(e/g)NBs). Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NBs of FIG.1 may provide any kind of these cells. A cellular radio system may be implemented as a multilayer network including several kinds of cells. Typically, in multilayer networks, one access node provides one kind of a cell or cells, and thus a plurality of (e/g)NBs are required to provide such a network structure.

For fulfilling the need for improving the deployment and performance of communication systems, the concept of "plug-and-play" (e/g)NBs has been introduced. Typically, a network which is able to use "plug-and-play" (e/g)NBs, includes, in addition to H(e/g)NBs, a home nodeB gateway, or HNB-GW (not illustrated in FIG.1). A HNB-GW, which is typically installed within an operator's network, may aggregate traffic from a large number of HNBs back to a core network.

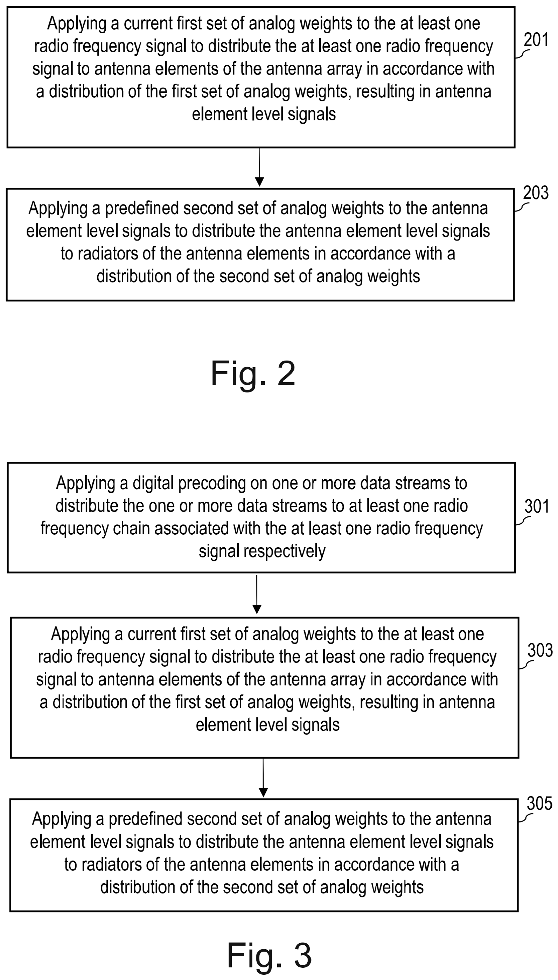

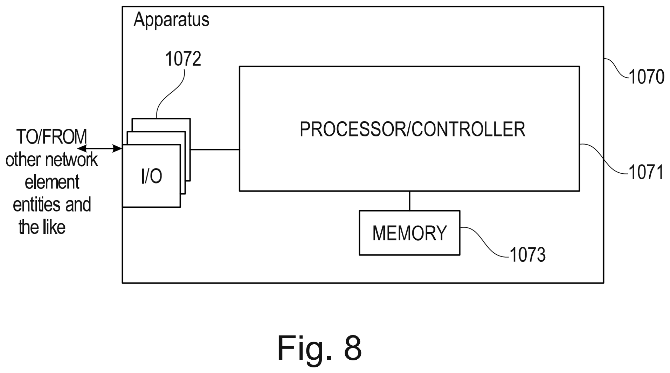

FIG. 2 is a process flowchart illustrating a method to transmit to a set of one or more devices, at least one radio frequency signal using an antenna array according to an example of the present subject matter. For the purpose of explanation, the method described in reference to FIG. 2 may be implemented in an apparatus such as the node 114 illustrated and described in reference to FIG. 1 or apparatus illustrated and described in reference to FIG. 8 but is not limited to this implementation.

At block 201, a current first set of analog weights may be applied to the at least one radio frequency signal to distribute the at least one radio frequency signal to antenna elements of the antenna array in accordance with a distribution of the first set of analog weights, resulting in antenna element level signals.

At block 203, a predefined second set of analog weights may be applied to the antenna element level signals to distribute the antenna element level signals to radiators of the antenna elements in accordance with a distribution of the second set of analog weights.

FIG. 3 is a process flowchart illustrating a method to transmit to a set of one or more devices, at least one radio frequency signal using an antenna array according to an example of the present subject matter. For the purpose of explanation, the method described in reference to FIG. 2 may be implemented in an apparatus such as the node 114 illustrated and described in reference to FIG. 1 or apparatus illustrated and described in reference to FIG. 8 but is not limited to this implementation.

At block 301, a digital precoding may be applied on one or more data streams to distribute the one or more data streams to at least one radio frequency chain associated with the at least one radio frequency signal respectively.

At block 303, a current first set of analog weights may be applied to the at least one radio frequency signal (resulting from block 301) to distribute the at least one radio frequency signal to antenna elements of the antenna array in accordance with a distribution of the first set of analog weights, resulting in antenna element level signals.

At block 305, a predefined second set of analog weights may be applied to the antenna element level signals to distribute the antenna element level signals to radiators of the antenna elements in accordance with a distribution of the second set of analog weights.

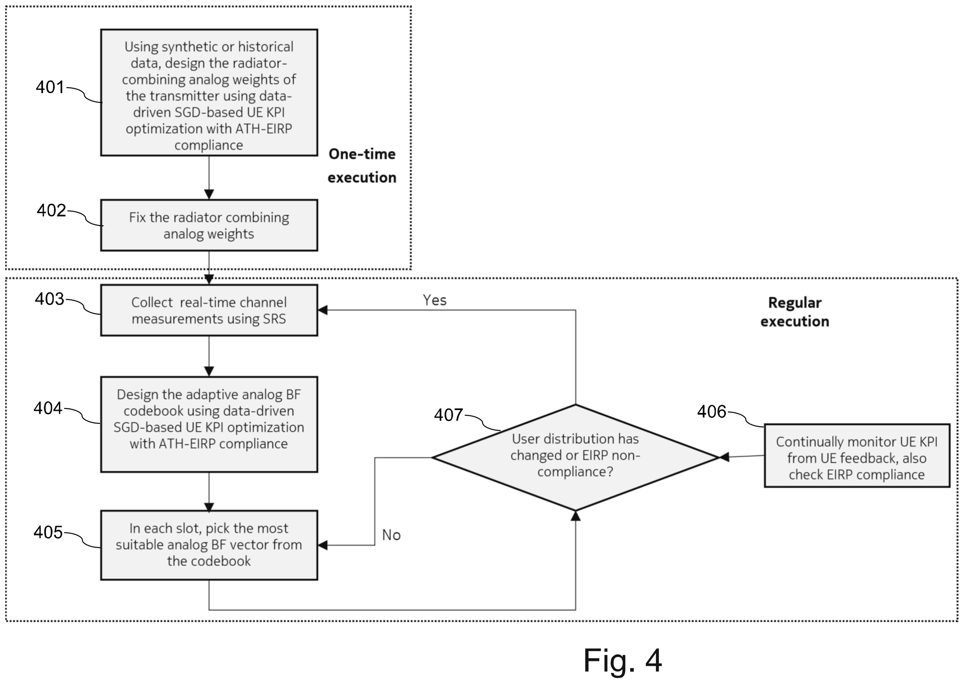

FIG. 4 is a process flowchart illustrating a method for using the first and second sets of analog weights to weight radio frequency signals according to an example of the present subject matter. For the purpose of explanation, the method described in reference to FIG. 4 may be implemented in an apparatus such as the node 114 illustrated and described in reference to FIG. 1 or apparatus illustrated and described in reference to FIG. 8 but is not limited to this implementation.

At block 401, synthetic or historical data is used to design the radiator combining analog weights of the apparatus to start the transmission-based KPI optimization with EIRP compliance. The radiator combining analog weights may be an example implementation of the second set of analog weights.

At block 402, the radiator combining analog weights is fixed.

At block 403, real-time channel measurements are collected using reference signals such as sounding reference signals (SRSs).

At block 404, the adaptive analog beamforming codebook is designed using data-driven SGD-based UE KPI optimization with ATH EIRP compliance.

At block 405, in each slot, the most suitable analog vector is picked from the codebook. The picked analog vector may be an example implementation of the first set of analog weights.

At block 406, UE KPI is continually monitored from UE feedback, and EIRP compliance is checked.

At block 407, it may be checked if the user distribution has changed or if there is EIRP non-compliance. If the answer to the question in block 407 is "Yes," the process returns to block 403. If the answer is "No," it moves to block 405.

Hence, blocks 401 and 402 may enable a one-time fixed analog weights design while blocks 403 to 407 may enable a periodic adaptive analog weights design. For the one-time fixed analog weights design, ray-tracing tools or channel generators or historical data, may be used to generate a dataset of channel realizations for multiple UEs in a geographical area. The dataset may be used to learn the fixed analog weights using gradient-descent via UE KPI optimization (like SNR or throughput) with the ATH-EIRP constraints in play. Since these weights may not be changed during the lifetime of the product, they may be used for the effectiveness of the subsequent adaptive analog weights design and digital precoder design. For the periodic adaptive analog weights design: Once the combining analog weights are fixed, real-time channel measurements for the active UEs are made, for example, using SRS, at regular intervals of time. Using these channel measurements, the adaptive analog BF codebook is learnt using gradient-descent via UE KPI optimization subject to ATH-EIRP constraints. This is performed at regular intervals of time whenever the UE KPIs have deteriorated or whenever there is noticeable change in the UE distribution (from the UE synchronization signals).

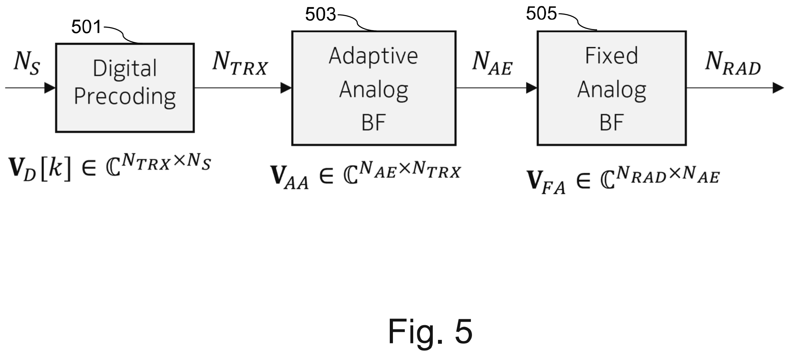

FIG. 5 is a diagram illustrating a method for applying weights to radio frequency signals according to an example of the present subject matter.

This diagram illustrates a multi-stage beamforming process consisting of digital precoding, adaptive analog beamforming, and fixed analog beamforming. Each stage modifies the signal to optimize transmission and enhance beamforming capabilities across different layers of the apparatus.

The process begins with digital precoding in block 501, which takes in $N_S$ data streams and outputs a digitally precoded signal $V_D[k]$ of dimension $\mathbb{C}^{N_{TRX} \times N_S}$ where $N_{TRX}$ represents the number of transceivers. This stage may apply phase and amplitude adjustments in the digital domain to prepare the signal for spatial processing, shaping the signal for initial beamforming directions across the transceivers. After digital precoding, the signal is fed into the adaptive analog beamforming stage in block 503. Here, the signal is adjusted by a matrix $V_{AA}$ of dimension $\mathbb{C}^{N_{AE} \times N_{TRX}}$, where $N_{AE}$ is the number of antenna elements. The adaptive analog beamforming layer provides a further layer of control, allowing real-time adjustments to phase and amplitude based on current channel conditions or environmental factors. The signal then passes through the fixed analog beamforming stage in block 505, represented by a matrix $V_{FA}$ of dimension $\mathbb{C}^{N_{RAD} \times N_{AE}}$, where $N_{RAD}$ is the number of radiators. This stage applies predetermined phase and amplitude adjustments, further refining the spatial characteristics of the signal. Unlike the adaptive layer, this stage is static, providing a stable base configuration to optimize final beam characteristics as the signal is radiated.

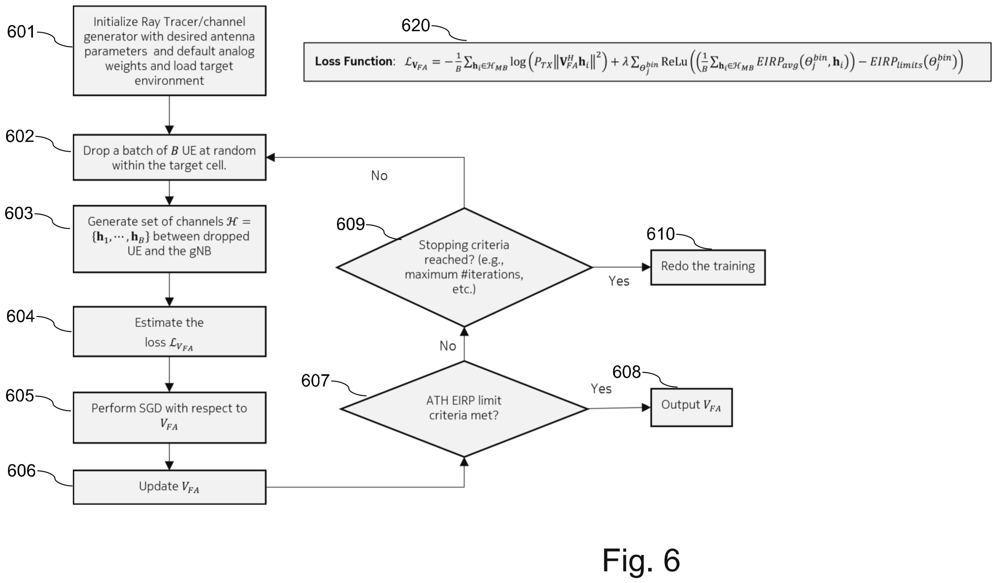

FIG. 6 is a process flowchart illustrating a method for determining the second set of analog weights for the apparatus according to an example of the present subject matter. The apparatus may, for example, be a gNB. For the purpose of explanation, the method described in reference to FIG. 6 may be implemented in an apparatus such as the node 114 illustrated and described in reference to FIG. 1 or apparatus illustrated and described in reference to FIG. 8 but is not limited to this implementation.

At block 601, the ray tracer may be initialized with antenna parameters of the apparatus. The ray tracer may further be initialized with default second set of analog weights being used by the apparatus and a load in a target environment covered by the apparatus.

At block 602, a batch of UEs is selected at random within the target cell.

At block 603, a set of channels between the selected UEs and the gNB is generated, using the ray tracer.

At block 604, the second loss function $\mathcal{L}_{\mathbf{V}_{FA}}$ 620 is estimated.

At block 605, SGD is evaluated using the second loss function 620 with respect to the second set of analog weights $v_{FA}$ in order to update the second set of analog weights $v_{FA}$ in block 606.

At block 607, it may be check if the ATH EIRP limit criteria are met. If the answer in block 607 is "Yes," the second set of analog weights $v_{FA}$ may be output at block 608.

If the answer in block 607 is "No," the method proceeds to block 609 to check if stopping criteria have been met, such as convergence, maximum iterations, etc. If the answer in block 609 is "Yes," the redone of the training is triggered at block 610 e.g., in order to repeat the entire method. If the answer in block 609 is "No," the method returns to block 602.

One example implementation of the method of FIG. 6 may be provided as follows. In this example, the apparatus may be provided so that $N_S = 1$; $N_{AE} = N_{TRX}$; $K = 1$; and power $= P_{TX}$. For a given radiator spacing and radiator gain pattern, a training dataset $\mathcal{H} \overset{\text{def}}{=} \{\mathbf{h}_i \in \mathbb{C}^{N_{RAD} \times 1}\}_{i=1}^{n_{train}}$ may be collected from a channel generator such as a Ray-tracing tool (or from historical data) that represents the channels from single antenna UEs drawn from a uniform distribution in the topology in context. We can define $\mathbf{h}_i = \left[\mathbf{h}_{i,1}^H, \cdots, \mathbf{h}_{i,N_{AE}}^H\right]^H$ $\forall i$, where $\mathbf{h}_{i,n} \in \mathbb{C}^{M_2 \times 1}$. So, the effective channel including the fixed analog precoder is

$$\mathbf{h}_{\text{eff},i} = \left[\mathbf{h}_{i,1}^H \boldsymbol{w}_1, \cdots, \mathbf{h}_{i,N_{AE}}^H \boldsymbol{w}_{N_{AE}}\right]^H \in \mathbb{C}^{N_{AE} \times 1}. \tag{10}$$

The optimal digital precoder is given by maximal ratio transmission (MRT):

$$\mathbf{d}_i = \sqrt{P_{TX}} \frac{\mathbf{h}_{\text{eff},i}}{\|\mathbf{h}_{\text{eff},i}\|}. \tag{11}$$

The derivation can be easily extended to the case with per-antenna power constraint. There, instead of MRT, phase matching approach may be used, i.e., $\mathbf{d}_i = \sqrt{P_{TX}/N_{TRX}} \exp\left(1j\angle \mathbf{h}_{\text{eff},i}\right)$. Furthermore, this can also be used for DFT codebooks. The useful signal power may be defined as:

$$\left\|\mathbf{h}_{\text{eff},i}^H \mathbf{d}_i\right\|^2 = P_{TX} \left\|\mathbf{h}_{\text{eff},i}^H\right\|^2$$

$$= P_{TX} \sum_{j=1}^{N_{AE}} \left|\mathbf{h}_{i,j}^H \mathbf{w}_j\right|^2 = P_{TX} \left\|\mathbf{h}_i^{\mathrm{H}} \mathbf{V}_{FA}\right\|^2 = P_{TX} \left\|\mathbf{V}_{FA}^H \mathbf{h}_i\right\|^2. \tag{12}$$

Also, for each elevation bin $\theta_j^{bin} = \left[\theta_{j,L}, \theta_{j,L}\right)$ of the table, the average EIRP may be defined as (based on equation (9)),

$$EIRP_{avg}\left(\theta_j^{bin}, \mathbf{h}_i\right)$$

$$\stackrel{def}{=} \frac{\pi}{MN\left(\sin\theta_{j,H} - \sin\theta_{j,L}\right)} \sum_{\theta\in\theta_j^{bin}} \sum_{\phi\in\Phi} P_{TX} \left\|\mathrm{g}(\theta, \phi)\, \mathbf{a}_{UPA,d}^{H}(\phi, \theta)\frac{\mathbf{V}_{FA}\mathbf{V}_{FA}^{H}\mathbf{h}_i}{\|\mathbf{V}_{FA}^{H}\mathbf{h}_i\|}\right\|^2 \cos\theta. \quad (13)$$

The problem of interest may be to find the second set of analog weights $V_{FA}^{*}$ that maximizes a utility function f(.) while satisfying the ATH EIRP limit (e.g., WRC constraints) as follows:

$$\mathbf{V}_{FA}^{*} = \underset{\mathbf{V}_{FA}}{\operatorname{argmax}}\ \mathbb{E}_{h\in\mathcal{H}}\left[f\left(P_{TX}\|\mathbf{V}_{FA}^{H}\mathbf{h}\|^2\right)\right]$$

$$s.t.\ \mathbb{E}_{\mathbf{h}\in\mathcal{H}}\left[EIRP_{avg}\left(\theta_j^{bin}, \mathbf{h}\right)\right] \le EIRP_{limit}\left(\theta_j^{bin}\right), \forall j = 1, \cdots, 7, \quad (14)$$

where $EIRP_{limit}\left(\theta_j^{bin}\right)$ is the ATH EIRP limit in the $j^{th}$ bin as given in the table with the appropriate domain transformation and bandwidth scaling. The geometric mean of the SNRs may, for example, be used as the utility function which translates to minimizing $-E_i\left[\log(P_{TX}\|\mathbf{V}_{FA}^{H}\mathbf{h}_i\|^2)\right]$ (e.g., the thermal noise variance does not play a role in the optimization). Other techniques can also be considered, including arithmetic mean/geometric mean UE rates or any $\alpha$-fair utility function of UE rates. Therefore, the training is done by drawing a random minibatch $\mathcal{H}_{MB} \subseteq \mathcal{H}$ of batch size B and then applying SGD to the following second loss function:

$$\mathcal{L}_{\mathbf{V}_{FA}} = -\frac{1}{B}\sum_{\mathbf{h}_i\in\mathcal{H}_{MB}} \log(P_{TX}\|\mathbf{V}_{FA}^{H}\mathbf{h}_i\|^2)$$

$$+ \lambda\sum_{\theta_j^{bin}} \mathrm{ReLu}\left(\left(\frac{1}{B}\sum_{\mathbf{h}_i\in\mathcal{H}_{MB}} EIRP_{avg}\left(\theta_j^{bin}, \mathbf{h}_i\right)\right)\right.$$

$$\left. - EIRP_{limits}\left(\theta_j^{bin}\right)\right) \quad (15)$$

where ReLu(x) = max(0, x), and $\lambda$ needs to be a large, positive, real-valued number to make sure the EIRP constraints are satisfied. By defining the second set of analog weights as:

$$\mathbf{V}_{FA} = \begin{bmatrix} \mathbf{w}_1/\|\mathbf{w}_1\| & 0 & 0 & 0 \\ 0 & \mathbf{w}_2/\|\mathbf{w}_2\| & 0 & 0 \\ 0 & 0 & \ldots & 0 \\ 0 & 0 & 0 & \mathbf{w}_{N_{AE}}/\|\mathbf{w}_{N_{AE}}\| \end{bmatrix} \quad (16)$$

with $\left\{\mathbf{w}_j\right\}_{j=1}^{N_{AE}}$ as trainable parameters and $\mathcal{L}_{\mathbf{V}_{FA}}$ as the second loss function, the constraints may be enforced on the fixed analog precoder.

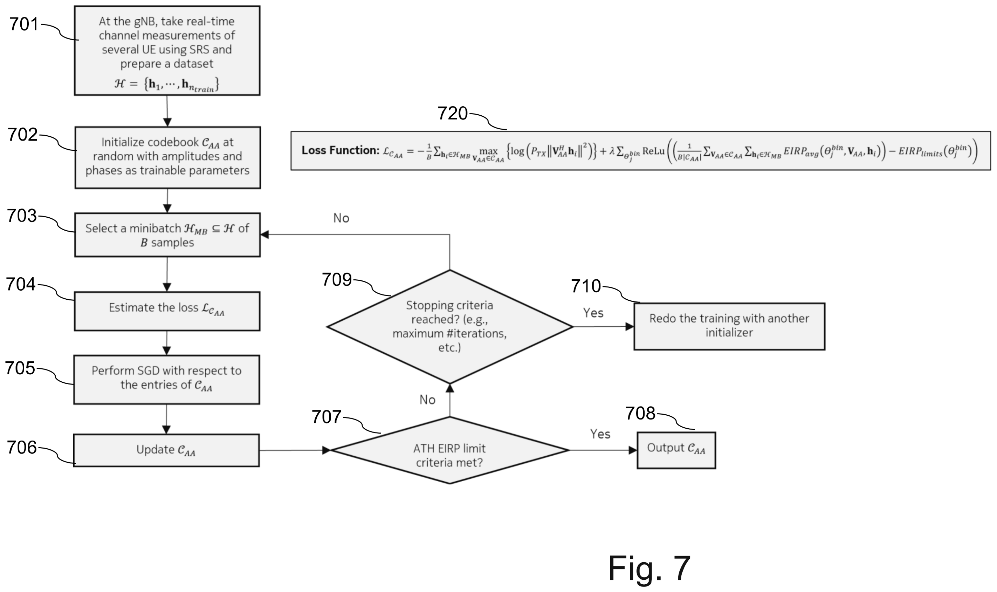

FIG. 7 is a process flowchart illustrating a method for determining the first set of analog weights for the apparatus according to an example of the present subject matter. The apparatus may, for example, be a gNB. For the purpose of explanation, the method described in reference to FIG. 7 may be implemented in an apparatus such as the node 114 illustrated and described in reference to FIG. 1 or apparatus illustrated and described in reference to FIG. 8 but is not limited to this implementation. The method of FIG. 7 may provide an example implementation of the steps 403 to 404 of FIG. 4.

At block 701, real-time channel measurements of several active UEs may be taken at the gNB based on SRS in order to create a training dataset $\mathcal{H}$ .

At block 702, the codebook $\mathcal{C}_{AA}$ is initialized at random with amplitudes and phases as trainable parameters.

At block 703, a minibatch $\mathcal{H}_{MB}$ of samples of the training dataset $\mathcal{H}$ is selected. At block 704, the first loss function $\mathcal{L}_{\mathcal{C}_{AA}}$ 720 is estimated.

At block 705, SGD is evaluated using the first loss function 720 with respect to the entries of the codebook $\mathcal{C}_{AA}$ in order to update the codebook $\mathcal{C}_{AA}$ at block 706.

At block 707, it may be checked if the ATH EIRP limit criteria are met. If the answer in block 707 is "Yes," the codebook $\mathcal{C}_{AA}$ may be output at block 708. If the answer in block 707 is "No," the method proceeds to block 709 to check if stopping criteria have been met, such as convergence, maximum iterations, etc. If the answer in block 709 is "Yes," the redone of the training is redone with another initializer is triggered at block 710. If the answer in block 709 is "No," the method returns to block 703.

One example implementation of the method of FIG. 7 may be provided as follows. A training dataset $\mathcal{H} \overset{\text{def}}{=} \{\mathbf{h}_i \in \mathbb{C}^{N_{AE} \times 1}\}_{i=1}^{n_{train}}$ that represents the single antenna channels from the most active UEs during a predefined duration of time may be collected from real-time measurements using SRSs. For example, the UEs that have been active during the last hour. Since the second set of analog weights $V_{FA}$ are fixed, these channel measurements $h_i$ may be the effective channels seen at the AE level. They may be defined as $\mathbf{h}_i = \begin{bmatrix} \mathbf{h}_{i,1}^H, & \cdots, & \mathbf{h}_{i,N_{TRX}}^H \end{bmatrix}^H \forall i$, where $\mathbf{h}_{i,n} \in \mathbb{C}^{M_1 \times 1}$ . The effective channel including the first set of analog weights $V_{AA}$ is

$$\mathbf{h}_{\text{eff},i} = \begin{bmatrix} \mathbf{h}_{i,1}^H \mathbf{v}_1, & \cdots, & \mathbf{h}_{i,N_{TRX}}^H \mathbf{v}_{N_{TRX}} \end{bmatrix}^H \in \mathbb{C}^{N_{TRX} \times 1} \qquad (17)$$

The optimal digital precoder is still given by MRT:

$$\mathbf{d}_i = \sqrt{P_{TX}} \frac{\mathbf{h}_{\text{eff},i}}{\|\mathbf{h}_{\text{eff},i}\|}. \qquad (18)$$

The problem of interest may be to maximize the same utility function as mentioned in FIG. 6 while satisfying the ATH EIRP limit (e.g., WRC constraints), with the difference being that the first set of analog weights $V_{AA}$ is now an element or codeword of the codebook $\mathcal{C}_{AA}$ whose cardinality is $|\mathcal{C}_{AA}| = M_{AA}$. The useful signal power is given by

$$\max_{V_{AA} \in \mathcal{C}_{AA}} \{P_{TX} \|\mathbf{V}_{AA}^H \mathbf{h}_i\|^2\},$$

and the average EIRP in a bin $\theta_j^{bin} = \begin{bmatrix} \theta_{j,L}, \theta_{j,L} \end{bmatrix}$ for a codeword $V_{AA} \in \mathcal{C}_{AA}$ is given by

$$EIRP_{avg}\left(\theta_j^{bin}, \mathbf{V}_{AA}, \mathbf{h}\right)$$

$$\overset{\text{def}}{=} \frac{\pi}{MN\left(\sin\theta_{j,H} - \sin\theta_{j,L}\right)} \sum_{\theta \in \theta_j^{bin}} \sum_{\phi \in \Phi} P_{TX} \left\| g(\theta, \phi)\, \mathbf{a}_{UPA,d}^H(\phi, \theta) \frac{\mathbf{V}_{AA}\mathbf{V}_{AA}^H \mathbf{h}}{\|\mathbf{V}_{AA}^H \mathbf{h}\|} \right\|^2 \cos( ) \qquad (19)$$

The aim may be to find a codebook $\mathcal{C}_{AA}^*$ as follows:

$$\mathcal{C}_{AA}^* = \underset{\mathcal{C}_{AA}}{\operatorname{argmax}} \, \mathbb{E}_{\mathbf{h} \in \mathcal{H}} \left[ f \left( \underset{\mathbf{V}_{AA} \in \mathcal{C}_{AA}}{\max} \left\{ P_{TX} \| \mathbf{V}_{AA}^H \mathbf{h} \|^2 \right\} \right) \right]$$

$$s.t. \quad \mathbb{E}_{\mathbf{h} \in \mathcal{H}, \mathbf{V}_{AA} \in \mathcal{C}_{AA}} \left[ EIRP_{avg}\left(\theta_j^{bin}, \mathbf{V}_{AA}, \mathbf{h}\right) \right] \leq EIRP_{limits}\left(\theta_j^{bin}\right), \forall j = \qquad (20)$$

$$1, \cdots, 7.$$

The function f(.) may be chosen to be the geometric mean SNR (or other KPIs like UE rates). Therefore, the codebook is trained by drawing a random minibatch $\mathcal{H}_{MB} \subseteq \mathcal{H}$ of batch size $B$ and then applying SGD to the following first loss function:

$$\mathcal{L}_{\mathcal{C}_{AA}} = -\frac{1}{B} \sum_{\mathbf{h}_i \in \mathcal{H}_{MB}} \underset{\mathbf{V}_{AA} \in \mathcal{C}_{AA}}{\max} \{ \log(P_{TX} \| \mathbf{V}_{AA}^H \mathbf{h}_i \|^2) \}$$

$$+ \lambda \sum_{\theta_j^{bin}} \operatorname{ReLu} \left( \left( \frac{1}{B|\mathcal{C}_{AA}|} \sum_{\mathbf{V}_{AA} \in \mathcal{C}_{AA}} \sum_{\mathbf{h}_i \in \mathcal{H}_{MB}} EIRP_{avg}\left(\theta_j^{bin}, \mathbf{V}_{AA}, \mathbf{h}_i\right) \right) \right. \qquad (21)$$

$$\left. - EIRP_{limits}\left(\theta_j^{bin}\right) \right)$$

where, as before, $EIRP_{limits}\left(\theta_j^{bin}\right)$ are taken from the table in the appropriate domain with the appropriate bandwidth scaling, $EIRP_{avg}\left(\theta_j^{bin}, \mathbf{V}_{AA}, \mathbf{h}_i\right)$ is given by equation (19), and $\lambda$ is a large, positive, real-valued number to make sure that the EIRP constraints are satisfied. With equation (1) in view, let $\alpha_{nj} = g(b_{nj})$ where

$$g(x) \stackrel{def}{=} \frac{(1-\gamma)}{(1+e^{-x})} + \gamma = (1-\gamma)\operatorname{sigmoid}(x) + \gamma. \qquad (22)$$

Then, $b_{nj}$ and $\theta_{n1}$, $j = 1, \cdots, M_1$, $n = 1, \cdots, N_{TRX}$, are trainable parameters with which the constraints may be enforced on the adaptable analog BF. In this case, the codebook $\mathcal{C}_{AA}$ may be expressed as a matrix of shape $N_{AE} \times M_{AA}$ with each column representing $\left[\mathbf{v}_1^H, \cdots, \mathbf{v}_{N_{TRX}}^H\right]^H \in \mathbb{C}^{N_{AE} \times 1}$, with the operation $\mathbf{V}_{AA}^H \mathbf{h}_i$ understood to be a matrix-vector multiplication with $V_{AA}$ given by equation (1) in order to perform the required training using the loss function $\mathcal{L}_{\mathcal{C}_{AA}}$. Once $\mathcal{C}_{AA}^*$ has been obtained, the entries are quantized to the nearest values that the BFIC allows.

In FIG. 8, a block circuit diagram illustrating a configuration of an apparatus 1070 is shown, wherein the apparatus 1070 is configured to implement at least part of the present subject matter. It is to be noted that the apparatus 1070 illustrated in FIG. 8 may comprise several further elements or functions besides those described herein below, which are omitted herein for the sake of simplicity as they are not essential for the understanding. Furthermore, the apparatus may be also another device having a similar function, such as a chipset, a chip, a module, etc., which can also be part of an apparatus or attached as a separate element to the apparatus 1070, or the like. The apparatus 1070 may comprise a processing function or processor 1071, such as a central processing unit (CPU) or the like, which executes instructions given by programs or the like related to a flow control mechanism. The processor 1071 may comprise one or more processing portions dedicated to specific processing as described below, or the processing may be run in a single processor. Portions for executing such specific processing may be also provided as discrete elements or within one or more further processors or processing portions, such as in one physical processor like a CPU or in several physical entities, for example. Reference sign 1072 denotes transceiver or input/output (I/O) units (interfaces) connected to the processor 1071. The I/O units 1072 may be used for communicating with one or more other network elements, entities, terminals or the like. The I/O units 1072 may be a combined unit comprising communication equipment towards several network elements or may comprise a distributed structure with a plurality of different interfaces for different network elements. Reference sign 1073 denotes a memory usable, for example, for storing data and programs to be executed by the processor 1071 and/or as a working storage of the processor 1071.

The processor 1071 is configured to execute processing related to the subject matter described throughout this disclosure. In particular, the apparatus 1070 may be configured to perform at least part of the method as described in reference to FIG. 2, 3, 4, 5, 6 or 7.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

**Claims**

1. An apparatus (114, 1070) for a wireless communication system, the apparatus comprising:
   an antenna array configured to transmit to a set of one or more devices, at least one radio frequency signal by at least:

   apply (201, 303) a current first set of analog weights to the at least one radio frequency signal to distribute the at least one radio frequency signal to antenna elements of the antenna array in accordance with a distribution of the first set of analog weights, resulting in antenna element level signals; and
   apply (203, 305) a predefined second set of analog weights to the antenna element level signals to distribute the antenna element level signals to radiators of the antenna elements in accordance with a distribution of the second set of analog weights.

2. The apparatus of claim 1, further comprising at least one processor; and at least one memory storing instructions that, when executed by the at least one processor, cause the apparatus at least to:

select from available analog weights the first set of analog weights that correspond to at least one of the following:

a time slot covered by the at least one radio frequency signal; or
a propagation channel condition of propagation channels for the transmission of the at least one radio frequency signal to the set of devices, wherein the instructions, when executed by the at least one processor, further cause the apparatus to:

select from available analog weights the first set of analog weights that enable the transmission of the at least one radio frequency signal with an optimal performance indicator for the set of devices within defined power constraints.

3. The apparatus of claim 2, wherein the available analog weights are provided as an adaptive codebook in accordance with different propagation channel conditions, wherein the adaptive codebook comprises per propagation channel condition analog weights that are determined to enable an optimal performance indicator, within the defined power constraints, for devices whose propagation channels define the propagation channel condition, wherein the defined power constraints are specified on a per-bin basis across bins of elevation angles determined by relative positioning of devices and a serving node, the serving node comprising the apparatus.

4. The apparatus of any of the preceding claims 2 to 3, wherein the instructions, when executed by the at least one processor, further cause the apparatus to:

update the available analog weights in response to an update condition being fulfilled, wherein the update condition is at least one of: detection of a propagation channel condition not covered by the propagation channel conditions for which the available analog weights are determined, or a specified time update interval, and determine propagation channel conditions for determination of the available analog weights using real time data, the real time data comprising received reference signals from devices in the wireless communication system.

5. The apparatus of any of the preceding claims, the predefined second set of analog weights is designed to enable transmissions of radio frequency signals in the wireless communication system with an optimal performance indicator, for receiving devices, within defined power constraints, wherein the predefined second set of analog weights is determined based on propagation channel conditions which are determined using synthetic data, wherein the synthetic data comprises at least one of historical data on channels and simulation data of channels in the wireless communication system.

6. The apparatus of claim 5, wherein the determination of the available analog weights and the second set of analog weights is performed using an objective function that optimizes the performance indicator within the defined power constraints.

7. The apparatus of any of the preceding claims, further comprising at least one processor; and at least one memory storing instructions that, when executed by the at least one processor, cause the apparatus at least to: apply a digital precoding on one or more data streams to distribute the one or more data streams to at least one radio frequency chain associated with the at least one radio frequency signal respectively.

8. The apparatus of any of the preceding claims, the antenna array comprising shifters and attenuators, the shifters and attenuators comprising dynamically configurable shifters and attenuators configured for performing the application of the first set of analog weights.

9. The apparatus of any of the preceding claims, wherein the distribution of the first set of analog weights is provided so that each radio frequency signal of the at least one radio frequency signal is assigned to a respective distinct subset of antenna elements of the antenna elements in accordance with the first set of analog weights, and the at least one radio frequency signal comprising multiple radio frequency signals which are transmitted simultaneously.

10. The apparatus of any of the preceding claims, wherein the at least one radio frequency signal is encoded according to a set of frequency units, with the first set of analog weights comprising subsets of analog weights for the set of frequency units respectively, the second set of analog weights comprising subsets of analog weights for the set of frequency units respectively.

11. The apparatus of any of the preceding claims, wherein the radiators are grouped into the antenna elements to enable dual-polarized signals.

12. The apparatus of any of the preceding claims 5 to 11, the defined power constraints comprising one or more limits on equivalent isotropic radiated power (EIRP).

13. The apparatus of any of the preceding claims 5 to 12, the performance indicator for a set of devices including a device-level indicator and a collective indicator, wherein the device-level indicator includes at least one of: signal-to-interference-plus-noise ratio (SINR), throughput, latency, or packet loss for an individual device, wherein the collective indicator includes, across the set of devices, at least one of: average or median throughput, aggregate throughput, or overall latency distribution.

14. A method comprising: transmitting to a set of one or more devices, at least one radio frequency signal, the transmitting comprising: applying (201, 303) a current first set of analog weights to the at least one radio frequency signal to distribute the at least one radio frequency signal to antenna elements of the antenna array in accordance with a distribution of the first set of analog weights, resulting in antenna element level signals; and applying (203, 305) a predefined second set of analog weights to the antenna element level signals to distribute the antenna element level signals to radiators of the antenna elements in accordance with a distribution of the second set of analog weights.

15. A computer program product comprising processor executable instructions for causing an apparatus for performing the method of claim 14.

Fig. 1

Applying a current first set of analog weights to the at least one radio frequency signal to distribute the at least one radio frequency signal to antenna elements of the antenna array in accordance with a distribution of the first set of analog weights, resulting in antenna element level signals — 201

Applying a predefined second set of analog weights to the antenna element level signals to distribute the antenna element level signals to radiators of the antenna elements in accordance with a distribution of the second set of analog weights — 203

# Fig. 2

Applying a digital precoding on one or more data streams to distribute the one or more data streams to at least one radio frequency chain associated with the at least one radio frequency signal respectively — 301

Applying a current first set of analog weights to the at least one radio frequency signal to distribute the at least one radio frequency signal to antenna elements of the antenna array in accordance with a distribution of the first set of analog weights, resulting in antenna element level signals — 303

Applying a predefined second set of analog weights to the antenna element level signals to distribute the antenna element level signals to radiators of the antenna elements in accordance with a distribution of the second set of analog weights — 305

# Fig. 3

EP 4 757 072 A1

**401** — Using synthetic or historical data, design the radiator-combining analog weights of the transmitter using data-driven SGD-based UE KPI optimization with ATH-EIRP compliance

**One-time execution**

**402** — Fix the radiator combining analog weights

**403** — Collect real-time channel measurements using SRS

**Regular execution**

**404** — Design the adaptive analog BF codebook using data-driven SGD-based UE KPI optimization with ATH-EIRP compliance

**405** — In each slot, pick the most suitable analog BF vector from the codebook

**407** — User distribution has changed or EIRP non-compliance?

Yes

No

**406** — Continually monitor UE KPI from UE feedback, also check EIRP compliance

Fig. 4

$N_S \rightarrow$ **501** Digital Precoding $\xrightarrow{N_{TRX}}$ **503** Adaptive Analog BF $\xrightarrow{N_{AE}}$ **505** Fixed Analog BF $\xrightarrow{N_{RAD}}$

$$\mathbf{V}_D[k] \in \mathbb{C}^{N_{TRX} \times N_S}$$

$$\mathbf{V}_{AA} \in \mathbb{C}^{N_{AE} \times N_{TRX}}$$

$$\mathbf{V}_{FA} \in \mathbb{C}^{N_{RAD} \times N_{AE}}$$

## Fig. 5

601 — Initialize Ray Tracer/channel generator with desired antenna parameters and default analog weights and load target environment

620 — **Loss Function**: $\mathcal{L}_{V_{FA}} = -\frac{1}{B} \sum_{\mathbf{h}_i \in \mathcal{H}_{MB}} \log\left(P_{TX} \|V_{FA}^H \mathbf{h}_i\|^2\right) + \lambda \sum_{\theta_j^{bin}} \text{ReLu}\left(\left(\frac{1}{B} \sum_{\mathbf{h}_i \in \mathcal{H}_{MB}} EIRP_{avg}(\theta_j^{bin}, \mathbf{h}_i)\right) - EIRP_{limits}(\theta_j^{bin})\right)$

602 — Drop a batch of $B$ UE at random within the target cell.

603 — Generate set of channels $\mathcal{H} = \{\mathbf{h}_1, \cdots, \mathbf{h}_B\}$ between dropped UE and the gNB

604 — Estimate the loss $\mathcal{L}_{V_{FA}}$

605 — Perform SGD with respect to $V_{FA}$

606 — Update $V_{FA}$

609 — Stopping criteria reached? (e.g., maximum #iterations, etc.)

610 — Redo the training

607 — ATH EIRP limit criteria met?

608 — Output $V_{FA}$

No

Yes

No

Yes

Fig. 6

701 — At the gNB, take real-time channel measurements of several UE using SRS and prepare a dataset
$$\mathcal{H} = \{\mathbf{h}_1, \cdots, \mathbf{h}_{n_{train}}\}$$

702 — Initialize codebook $\mathcal{C}_{AA}$ at random with amplitudes and phases as trainable parameters

720 — **Loss Function:** $\mathcal{L}_{\mathcal{C}_{AA}} = -\frac{1}{B}\sum_{\mathbf{h}_i \in \mathcal{H}_{MB}} \max_{\mathbf{V}_{AA} \in \mathcal{C}_{AA}} \left\{ \log\left(P_{TX} \|\mathbf{V}_{AA}^H \mathbf{h}_i\|^2\right) \right\} + \lambda \sum_{\theta_j^{bin}} \mathrm{ReLu}\left( \left( \frac{1}{B|\mathcal{C}_{AA}|} \sum_{\mathbf{V}_{AA} \in \mathcal{C}_{AA}} \sum_{\mathbf{h}_i \in \mathcal{H}_{MB}} EIRP_{avg}(\theta_j^{bin}, \mathbf{V}_{AA}, \mathbf{h}_i) \right) - EIRP_{limits}(\theta_j^{bin}) \right)$

703 — Select a minibatch $\mathcal{H}_{MB} \subseteq \mathcal{H}$ of $B$ samples

704 — Estimate the loss $\mathcal{L}_{\mathcal{C}_{AA}}$

705 — Perform SGD with respect to the entries of $\mathcal{C}_{AA}$

706 — Update $\mathcal{C}_{AA}$

No

709 — Stopping criteria reached? (e.g., maximum #iterations, etc.)

710 — Redo the training with another initializer

Yes

No

707 — ATH EIRP limit criteria met?

Yes

708 — Output $\mathcal{C}_{AA}$

Fig. 7

Fig. 8

**EUROPEAN SEARCH REPORT**

Application Number

EP 25 22 1105

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2020/259462 A1 (WU KENNY [US] ET AL) 13 August 2020 (2020-08-13)<br>* abstract *<br>* paragraph [0002] *<br>* paragraphs [0021] - [0025]; figure 1 *<br>----- | 1,7-11,<br>14,15<br>2-6,12,<br>13 | INV.<br>H01Q3/26<br>H04B7/06 |
| A | US 2017/366242 A1 (LEE WOOK BONG [US] ET AL) 21 December 2017 (2017-12-21)<br>* abstract *<br>* paragraphs [0002] - [0005] *<br>* paragraphs [0007] - [0012], [0031] - [0125]; figures 1-9 *<br>----- | 1-15 | |
| A | WO 2022/133824 A1 (HUAWEI TECH CO LTD [CN]) 30 June 2022 (2022-06-30)<br>* abstract *<br>* paragraphs [0005] - [0013] *<br>* paragraphs [0070] - [0074]; figures 1,2 *<br>----- | 1-15 | |

TECHNICAL FIELDS
SEARCHED (IPC)

H01Q
H04B

The present search report has been drawn up for all claims

| Place of search | Date of completion of the search | Examiner |
|---|---|---|
| Munich | 8 April 2026 | van Norel, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 25 22 1105

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2026

| Patent document cited in search report | | | Publication date | Patent family member(s) | | Publication date |
|---|---|---|---|---|---|---|
| US 2020259462 | A1 | | 13-08-2020 | JP 7268204 B2 | | 02-05-2023 |
| | | | | JP 7730347 B2 | | 27-08-2025 |
| | | | | JP 2022520673 A | | 31-03-2022 |
| | | | | JP 2023089243 A | | 27-06-2023 |
| | | | | US 2020259462 A1 | | 13-08-2020 |
| | | | | WO 2020163821 A1 | | 13-08-2020 |
| US 2017366242 | A1 | | 21-12-2017 | CN 107528617 A | | 29-12-2017 |
| | | | | EP 3258537 A1 | | 20-12-2017 |
| | | | | US 2017366242 A1 | | 21-12-2017 |
| WO 2022133824 | A1 | | 30-06-2022 | CN 116547866 A | | 04-08-2023 |
| | | | | WO 2022133824 A1 | | 30-06-2022 |

EPO FORM P0459

For more details about this annex : see Official Journal of the European Patent Office, No. 12/82